# EUROPÄISCHE PATENTSCHRIFT

(11) **EP 3 110 724 B1**
(45) Veröffentlichungstag und Bekanntmachung des Hinweises auf die Patenterteilung: **28.04.2021**
(21) Anmeldenummer: 15705231.7
(22) Anmeldetag: 06.02.2015
(51) Int. Cl.: B65G 1/02

(54) **LAGERGEBÄUDE**
WAREHOUSE
ENTREPÔT

(30) Priorität: 28.02.2014 DE 102014203763; 20.03.2014 DE 102014205230
(43) Veröffentlichungstag der Anmeldung: 04.01.2017
(73) Patentinhaber: Siemens Aktiengesellschaft, 80333 München (DE)
(72) Erfinder: MICHEL, Holger, 91126 Schwabach (DE)
(74) Vertreter: Siemens Patent Attorneys
(86) Internationale Anmeldenummer: PCT/EP2015/052474
(87) Internationale Veröffentlichungsnummer: WO 2015/128167

(56) Entgegenhaltungen:
- WO-A1-2013/183376
- DE-A1- 2 016 168
- DE-U1-202011 102 596
- JP-A- S5 457 771
- JP-A- 2006 245 486
- JP-A- 2008 120 585
- Ikea: "EXPEDIT", , 21 January 2014 (2014-01-21), XP055584980, Retrieved from the Internet: URL:https://web.archive.org/web/2014011410 0959if_/http://www.ikea.com:80/au/en/assem bly_instructions/expedit-shelving-unit__AA -322049-9_pub.pdf [retrieved on 2019-05-02]
- Cisco-Eagle: "Over-Dock Pallet Storage Racks Your Solution to Empty Pallet Storage Problems Single-Leg, Wall-Tied Ceiling-Supported System", , 30 May 2013 (2013-05-30), XP055584857, Retrieved from the Internet: URL:http://www.cisco-eagle.com/catalog/Doc uments/Steel-King/OverDockRack-Web.pdf [retrieved on 2019-04-30]

## Beschreibung

### Lagergebäude

Die Erfindung betrifft ein Lagergebäude zum Lagern von Ladeeinheiten mit einer Lagereinrichtung.

JP2006245486(A) offenbart eine Lagerstruktur die an einem horizontalen Gebäudebalken befestigt ist. JP2006245486(A) offenbart ein Lagergebäude nach dem Oberbegriff des Anspruchs 1.

Unter Lagerhaltung versteht man in Produktion und Logistik eine Aufbewahrung von Material bzw. Gütern, im Folgenden allgemein als Ladeeinheiten bezeichnet, beispielsweise Waren, als Teilaufgabe einer Materialwirtschaft. Lagerung bedeutet dabei eine gewollte Unterbrechung eines betrieblichen Materialflusses, d.h. es entstehen bewusst gebildete Pufferbestände.

Dazu erfordert die Lagerhaltung eine Lagereinheit, wie ein Lager, beispielsweise ausgebildet als Lagergebäude, mit einer (dortigen) Lagereinrichtung, in dem bzw. in der die Ladeeinheiten temporär aufbewahrt, d.h. ein- und/oder ausgelagert sowie transportiert, werden können.

Eine solche übliche Lagereinheit bzw. ein solches übliches Lager mit dortiger Lagereinrichtung ist beispielsweise ein Hochregallager mit in meist parallelen (Regal-)Reihen strukturiert angeordneten Hochregalen (bzw. kurz nur Regale), in welchen die Ladeeinheiten gelagert werden.

Zwischen jeweils zwei Regalreihen befindet sich eine Gasse (Bedienweg oder auch Gang), über welche die zu lagernden Ladeeinheiten zu ihrem Bestimmungsort im jeweiligen Regal transportiert - und dort ein-/ausgelagert werden.

Vereinfacht anschaulich ausgedrückt, die Gassen/Bedienwege trennen die so dann in parallelen Reihen angeordneten Regale und strukturieren so das Hochregallager.

In den Gassen/Gängen/Bedienwegen (im Folgenden meist kurz nur Bedienweg) bewegen sich sogenannte Regalbediengeräte (RBG) (in der Regel pro Bedienweg ein solches RBG oder paarweise), welche z. B. durch in den Bedienwegen verlegte Schienen oder dortige Induktionsführungen nur in Längsrichtung der jeweiligen Gasse fahren können, d.h. sie sind - funktionell und strukturell - gassengebundene Fahreinheiten, um so die Ladeeinheiten in die Regale (beiderseits des jeweiligen Bedienwegs/Gasse) - dann mittels integrierter Hebezeuge, beispielsweise einem Hubschlitten, - ein- und/oder auszulagern.

Das Regalbediengerät ist so eine - funktionelle und strukturelle - Kombination von gassengebundenem Flurförderzeug und Hebezeug, welcher (gassengebundener) "Flurförderteil" sich in Fahrtrichtung, d.h. Gassen-/Ganglängs- bzw. Bedienwegerichtung, und "Hebezeugteil" bzw. Hubschlitten in Hubrichtung bewegen.

Das Regalbediengerät tritt nie alleine auf, sondern immer in Kombination mit einer/-m sog. Lastaufnahmeeinheit/-mittel, welches die Ladung, d.h. die Ladeeinheiten, direkt oder sog. Ladehilfsmittel, welche dann als Träger der Ladeeinheiten fungieren, quer zum Gang/Bedienweg manipuliert.

Jede Gasse hat einen Zufuhr-/Ein- und Auslagerungsbereich (Vorzone), welche meist an Enden (Kopfbereich am Anfang bzw. Ende eines Bedienwegs) angeordnet sind.

Über den Zufuhr-/Einlagerungsbereich eines Bedienwegs werden die Ladeeinheiten (von einem Bearbeitungs- bzw. Arbeitsbereich) angeliefert und dort von dem (den jeweiligen Bedienweg bedienenden) Regalbediengerät zwecks Einlagern abgeholt. Analog wird an dem Auslagerungsbereich eines Bedienwegs die Ware nach dem Auslagern durch das jeweilige Regalbediengerät abgelegt.

Die Anbindung des Materialflusses (in der/über die Vorzone) in bzw. aus der Lagereinrichtung bzw. dem Hochregallager (an den Bearbeitungs- bzw. Arbeitsbereich) erfolgt über eine Fördertechnik, wie eine Streckenfördertechnik, beispielsweise eine Elektrobodenbahn, eine Elektrohängerbahn und/oder einen Stetigförderer, welche den Transport der Ladeeinheiten von dem - in diesem Fall lokal (örtlich) weiter entfernten - Bearbeitungs- bzw. Arbeitsbereich zu den Zufuhr-/Ein- und Auslagerungsbereichen bzw. Vorzonen der Lagereinrichtung bzw. des Hochregallagers bewerkstelligt.

Neben diesen Materialflusssystemen mit örtlich weiter entfernten Bearbeitungs- bzw. Arbeitsbereichen (und entsprechender Streckenfördertechnik) sind auch Lager mit einer Lagereinrichtung bzw. einem Hochregallager bekannt, welche/welches - als bzw. in einer (oberen) Gebäudeebene innerhalb eines Lagergebäudes - oberhalb eines - sich in diesem Fall (auch) innerhalb des Lagergebäudes befindlichen - ("untenliegenden"/"unteren") Bearbeitungs- bzw. Arbeitsbereichs befinden. Anschaulich ausgedrückt, das Hochregallager befindet sich hier in einer oberen Gebäudeebene, oberhalb des darunterliegenden Bearbeitungs- bzw. Arbeitsbereichs innerhalb ein und desselben Lagergebäudes und ist über eine das Hochregallager aufnehmende/tragende (Stahlbeton-)Decke/Platte von dem Bearbeitungs- bzw. Arbeitsbereich getrennt.

Die für die Anbindung des Materialflusses (in der/über die Vorzone) in bzw. aus der Lagereinrichtung bzw. dem Hochregallager hier verwendete Fördertechnik ist in diesem Fall meist ein Vertikalförderer, wie ein Heber, welcher den Transport der Ladeeinheiten von dem unteren Bearbeitungs- bzw. Arbeitsbereich in/zu den oberen Zufuhr-/Ein- und Auslagerungsbereichen bzw. Vorzonen der (oberen) Lagereinrichtung bzw. des Hochregallagers bewerkstelligt.

Eine Übergabe der Ladeeinheiten in den Zufuhr-/Ein- und Auslagerungsbereichen bzw. Vorzonen von der Fördertechnik (Strecken-/Vertikalfördertechnik) an das jeweilige Regalbediengerät eines Bedienwegs erfolgt durch eine weitere Fördertechnik (Übergabefördertechnik), beispielsweise Kettenförderer, angetriebene Rollenbahnen, Schwerkraftrollenbahnen, Hubtische, Drehtische, Umsetzer, fahrerlose Transportfahrzeuge und Verschiebewagen.

Bei dem Bearbeitungs- bzw. Arbeitsbereich erfolgt in der Regel ein weiteres Umlagern/Kommissionieren der Ladeeinheiten, wobei eine weitere oder gegebenenfalls auch mehrere weitere Übergabefördertechniken, wie die Kettenförderer, angetriebene Rollenbahnen, Schwerkraftrollenbahnen, Hubtische, Drehtische, Umsetzer, fahrerlose Transportfahrzeuge, Verschiebewagen und Vertikalförderer, notwendig sind, welche die Übergabe (bzw. die gegebenenfalls mehreren Übergaben) der Ladeeinheiten von der Streckenfördertechnik an den Bearbeitungsbereich bewerkstelligen.

Sind die Bearbeitungs- bzw. Arbeitsbereiche bei den bekannten Materialflusssystemen örtlich entfernt zu der Lagereinrichtung angeordnet - und ist so die beschriebene Streckenfördertechnik, wie die Elektrobodenbahn, die Elektrohängerbahn oder der Stetigförderer, erforderlich, so hat dies insbesondere den Nachteil, dass diese aufgrund ihrer Komplexität teuer sind, sowie durch lange und komplexe Streckenführung lange Fahrzeiten bedingen. Insbesondere Stetigförderer besitzen den Nachteil, dass eine Transportzeit von den Ladeeinheiten hoch ist. Ein Handling der Ladeeinheiten (Materialflusshandling) an den Übergabestellen (wie beispielsweise in den Vorzonen von der Streckenfördertechnik über die Übergabefördertechnik auf das Regalbediengerät oder die entsprechende Übergabe von der Streckenfördertechnik an den Bearbeitungsbereich) ist dazu kompliziert. Darüber hinaus erfordern diese Materialflusssysteme mit örtlich entfernten Bearbeitungs- bzw. Arbeitsbereichen erhöhten Platzbedarf.

Sind die Bearbeitungs- bzw. Arbeitsbereiche bei den auch bekannten Materialflusssystemen innerhalb desselben Lagergebäudes und dort (in unterer Ebene) unterhalb der (oberen/in oberer Ebene befindlichen) Lagereinrichtung angeordnet, so ist hier die die Lagereinrichtung aufnehmende bzw. tragende Decke/Platte notwendig, was hohe Kosten und/oder erhöhten Konstruktionsaufwand erfordert.

Ist diese Decke bzw. Bodenplatte durch eine Gebäudeebene innerhalb des Lagergebäudes gebildet, so steht dieser Platz bzw. diese Gebäudeebene für eine anderweitige, effiziente (Materialfluss-)Nutzung, beispielsweise eine weitere Lagereinrichtung bzw. ein weiteres Hochregallager, nicht mehr zur Verfügung.

Der Erfindung liegt die Aufgabe zugrunde, die Nachteile im Stand der Technik zu verbessern, insbesondere eine platzsparende Lagereinrichtung für ein Lager bzw. für eine Lagereinheit bzw. ein platzsparendes Lager bzw. eine platzsparende Lagereinheit mit einfachem und (zeit-)effizientem Materialflusshandling vorzusehen. Auch sollen die Lagereinrichtung und das Lager bzw. die Lagereinheit einfach und kostengünstig realisierbar sein.

Die Aufgabe wird durch ein Lagergebäude gemäss Anspruch 1 gelöst.

Bevorzugte Weiterbildungen der Erfindung ergeben sich auch aus den abhängigen Ansprüchen und/oder aus nachfolgenden Erläuterungen.

Die Lagereinrichtung für die Lagereinheit zum Lagern von Ladeeinheiten, beispielsweise auf Paletten angeordnete (Lang-/Flach-)Stückgüter, wie Waren und/oder (Klein-)Teile u.ä., ist als freitragende Trägerstruktur (auch als Tragstruktur bezeichnet) ausgebildet.

Dabei meint "freitragend" die Ausführung eines zentralen Konstruktionselements, wie hier die Träger- bzw. Tragstruktur der Lagereinrichtung, wenn dieses zur Erfüllung seiner Funktion ohne weitere äußere Elemente zur Lastaufnahme auskommen soll; also eine Konstruktion (von Tragelemente bzw. Trägern), die sich selbst stützt.

Dazu ist diese Konstruktion des zentralen Konstruktionselements, wie hier die Trägerstruktur, so ausgeführt, dass sämtliche im Betrieb aufkommende Belastungen zentral im zentralen Konstruktionselement, wie hier in der Trägerstruktur, aufgenommen werden.

Vereinfacht und anschaulich ausgedrückt, (Struktur-)Elemente/Bauteile der Lagereinrichtung, wie beispielsweise Strukturelemente einer Aufnahmeeinheit, beispielsweise Elemente/ Bauteile, wie Vertikalträger (Stützen), Horizontalträger (Balken) und/oder Diagonalstreben, eines Hochregallagers, und/oder Strukturelemente einer Bedieneinheit (insbesondere für die Aufnahmeeinheit/Hochregallager), beispielsweise Elemente/Bauteile, wie Vertikalträger (Stützen), Horizontalträger (Balken) und/oder Diagonalstreben, eines RBG, bilden eine (innere) freitragende Trägerstruktur (bei der Lagereinrichtung) aus, welche so sämtliche im Betrieb der Lagereinrichtung dort aufkommenden Belastungen, wie Lasten aus der Aufnahmeeinheit (Eigengewicht und Nutzlast (des Hochregallagers)) und Lasten des RBG (Eigengewicht und Nutzlast des RBG-Systems), in der Lagereinrichtung bzw. in der (freitragenden) Trägerstruktur aufnehmen.

An diese freitragende Trägerstruktur der Lagereinrichtung können dann weitere (ergänzende) Elemente/Bauteile der Lagereinrichtung, wie flächige Bauteile, andere Träger, Balken, Streben u.ä., insbesondere ergänzende Bauteile/Elemente von Aufnahmeeinheiten und/oder RBG, - zur Vervollständigung derselben (Unterstützungen/-selemente wie "Unterstützung Lagerfächer und RBG") - angeordnet sein.

Die so - als Gesamtes - "freitragende Lagereinrichtung" kann somit - in ihrer Gesamtheit - an einer weiteren Stützstruktur, wie tragende Elemente einer eine solche Lagereinrichtung aufnehmende Lagereinheit, an Gebäudestützen eines Lagergebäudes, insbesondere "punktuell" oder "linear", d.h. ohne eine Flächenlast aufnehmende Stützfläche, wie beispielsweise eine Platte, Bühne oder Decke, abgestützt werden. Vereinfacht ausgedrückt, die freitragende Lagereinrichtung, d.h. beispielsweise ein Hochregallager und das (zugehörige) RBG(-system), stützt sich an Gebäudestützen eines Lagergebäudes, beispielsweise an Gebäudeeckstützen, ab. Auch kann die Lagereinrichtung über Beistellstützen an Gebäudestützen getragen werden.

Erfindungsgemäß wird die freitragende Lagereinrichtung - über ihre freitragende Trägerstruktur - an einzelnen "Aufhängepunkten" in die Stützstruktur der Lagereinheit "eingebaut/-gehängt" bzw. die freitragende Lagereinrichtung wird an Gebäudestützen eines Lagergebäudes aufgehängt - und stützt sich so dort (im Gesamten) ab.

Der Einbau bzw. die Abstützung/Aufhängung kann über entsprechende (zumindest) kraftschlüssige Verbindungen (zwischen freitragender Trägerstruktur und Gebäudestützen) ausgeführt werden.

Die Anbindung bzw. die Verbindungen der freitragenden Lagereinrichtung an Gebäudestützen kann/können gewissen Bedingungen unterworfen sein, insbesondere wenn mehrere freitragenden Lagereinrichtung, beispielsweise übereinander, in der Lagereinheit "eingebaut" werden, um so unter Umständen auch Wirtschaftlichkeit und/oder Machbarkeit zu gewährleisten. So können die Anbindungen an den Gebäudestützen in einem bestimmten Raster und/oder in einem bestimmten (vertikalen und/horizontalen) Abstand angeordnet sein, welches sich dem der Lagereinrichtung anlehnt bzw. welche sich aus den Abmessungen der Lagereinrichtung ergeben.

Die freitragende Lagereinrichtung kann über ihre freitragende Trägerstruktur so in die Lagereinheit "eingebaut" werden, dass - in der Lagereinheit - unterhalb der Lagereinheit ein Bearbeitungs- bzw. Arbeitsbereich anordenbar ist. D.h., die freitragende Lagereinrichtung nimmt eine obere Ebene in der Lagereinheit ein, unter welcher der Bearbeitungs- bzw. Arbeitsbereich für die Ladeeinheiten angeordnet ist.

Einfach ausgedrückt, es entsteht ein Lagergebäude mit oberer Lagereinrichtung bzw. oberem Hochregal und (oberer) RBG sowie unterem Bearbeitungs- bzw. Arbeitsbereich. Die Anbindung der beiden Bereiche/Ebene erfolgt über eine Vertikalfördertechnik.

Bildet so die Lagereinrichtung - insbesondere aus dortigen schon vorhandenen und anderweitig funktionell genutzten - Elemente/Bauteilen - die freitragende Trägerstruktur aus - und wird die Lagereinrichtung über diese freitragende Trägerstruktur insbesondere dann als "Hoch-" bzw. obere Ebene (oberhalb eines darunterliegenden Bearbeitungs- bzw. Arbeitsbereichs) in einem Lager/Lagergebäude eingehängt/abgestützt, kann so auf zusätzliche (Flächenlast-) abstützende, Material verbrauchende, kostenintensive und "Platz verbrauchende" Flächen, wie (Zwischen-)Decken und/oder (Grund-)Platten, und Bauteile (für die sonstig notwendige Abstützung der Lagereinrichtung) verzichtet werden. Auch die sonstig ggf. notwendige Streckenfördertechnik zu örtlich entfernten Bearbeitungs- bzw. Arbeitsbereichen kann entfallen.

Hierdurch lässt sich so eine platzsparende, kostengünstige und einfach zu realisierende Lagereinrichtung für ein Lager bzw. für eine Lagereinheit bzw. ein platzsparendes Lager bzw. eine platzsparende Lagereinheit mit einfachem und (zeit-)effizientem Materialflusshandling (ohne Streckenfördertechnik zu örtlich entfernten Bearbeitungs- bzw. Arbeitsbereichen) realisieren.

Auch kann die Lagereinrichtung unterhalb einem Bearbeitungs- bzw. Arbeitsbereich in der Lagereinheit angeordnet werden, wodurch diese dann den "oberen" Bearbeitungs- bzw. Arbeitsbereich (obere Bearbeitungsebene) - bei entsprechender Ausbildung der freitragenden Trägerstruktur - mittragen kann.

Nach einer Weiterbildung ist vorgesehen, dass die freitragende Trägerstruktur eine - mechanisch günstige - Fachwerkträgerstruktur ausbildet.

Als Fachwerk kann hier eine Konstruktion aus mehreren Stäben bzw. Trägern verstanden werden, die an beiden Enden miteinander verbunden sind. Jeder Stab/Träger ist so Bestandteil mindestens eines Faches, also eines Drei- oder Mehrecks aus Stäben/Trägern. Durch dieses Prinzip entstehen in den einzelnen Elementen nur Druck- und Zugkräfte, wodurch die hohe Tragfähigkeit von Fachwerkkonstruktionen entsteht.

Insbesondere können hier dann bei der Fachwerkträgerstruktur der Lagereinrichtung deren Elemente, wie Trägern und/oder Streben, auch kreuzförmig angeordnet sein, um eine möglichst große Tragfähigkeit zu erzielen.

Weiterhin kann vorgesehen sein, dass die freitragende Trägerstruktur, insbesondere die Fachwerkträgerstruktur, unter Verwendung von Vertikalträger (Stützen), Horizontalträger (Balken) und/oder Diagonalstreben sowie andere Unterstützungselemente/-bauteile, insbesondere auch durch deren kreuzförmige Anordnung, ausgebildet ist.

Bevorzugt weist die Lagereinrichtung eine Aufnahmeeinheit, insbesondere eine Regaleinheit, wie ein Regal oder ein Hochregal, und/oder eine Bedieneinheit, insbesondere ein Regalbediengerät (RBG), auf.

Auch mehrere von den Aufnahmeeinheiten und/oder Bedieneinheiten können, insbesondere in Ebenen übereinander, für die Lagereinrichtung vorgesehen werden, wobei die freitragende Trägerstruktur der Lagereinrichtung, gebildet durch Strukturelemente der mehreren von den Aufnahmeeinheiten und/oder Bedieneinheiten, hier dann die Lasten dieser mehreren von den Aufnahmeeinheiten und/oder Bedieneinheiten aufnimmt.

Vereinfacht und anschaulich ausgedrückt, eine einzige freitragende Trägerstruktur (der einen Lagereinrichtung) trägt hier die Lasten aller bei der Lagereinrichtung vorgesehenen (mehreren) Aufnahmeeinheiten und/oder Bedieneinheiten. Die eine Lagereinrichtung kann dann über ihre einzige freitragende Trägerstruktur in der Lagereinheit, wie dem Lagergebäude, insbesondere an dortigen Gebäudestützen, eingehängt/abgestützt sein.

Weiterhin kann hier aber auch vorgesehen sein, dass - im Falle von mehreren Aufnahmeeinheiten und/oder Bedieneinheiten - jeweils eine freitragende Trägerstruktur für eine Aufnahmeeinheit und eine bzw. "die ihr zugehörige" Bedieneinheit vorgesehen ist.

Vereinfacht und anschaulich ausgedrückt, jede von hier dann mehreren Lagereinrichtungen - mit jeweils einer Aufnahmeeinheit und/oder einer Bedieneinheit - bildet "ihre" eigene freitragende Trägerstruktur aus, die hier jeweils die Lasten einer bei der jeweiligen Lagereinrichtung vorgesehenen jeweiligen Aufnahmeeinheit und/oder Bedieneinheit trägt. Diese mehreren Lagereinrichtungen können dann in Ebenen in der Lagereinheit, wie dem Lagergebäude, "eingehängt" bzw. abgestützt, beispielsweise an dortigen Gebäudestützen, sein.

Nach einer Weiterbildung ist vorgesehen, dass die freitragende Trägerstruktur über eine Höhe einer Aufnahmeeinheit, insbesondere über eine Regalhöhe eines Regals oder eines Hochregals, ausgebildet ist.

Anschaulich und einfach ausgedrückt, die freitragende Trägerstruktur reicht/erstreckt sich über die gesamte vertikale Höhe eines Hochregals.

Die freitragende Trägerstruktur kann auch entsprechend einer Struktur der Lagereinrichtung strukturiert sein. So kann sie zum Beispiel Teilstrukturen aufweisen, welche parallel und/oder im rechten Winkel zueinander und/oder zu Regalreihen, Bedienwegen und oder Gassen einer Aufnahmeeinheit und/oder eines RBG angeordnet sind. Auch gitter- und/oder würfelförmig ausgebildete freitragende Trägerstrukturen oder auch die Lagereinrichtung "einhüllende" freitragende Trägerstrukturen sind möglich.

Mittels Simulationsrechnungen und/oder F&E-Rechnungen können optimierte bzw. "lasttechnisch" günstige freitragende Trägerstrukturen für die Lagereinrichtung ermittelt werden.

Auch kann vorgesehen sein, dass die Lagereinrichtung blockförmig ausgebildet ist. Eine Ladeeinheit kann eine mit Gütern beladbare oder beladene Palette sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen bzw. Figuren gleiche Bezugszeichen auf.

Es zeigen:
- FIG 1: einen schematisch, räumlich dargestellten Ausschnitt eines Aufbaus (Einzelmodul) eines Warehouse mit einem dortigen blockförmigen, zweischichtigen freitragenden Hochregallager in oberer Ebene des Warehouse (oberhalb eines darunterliegenden Arbeits- und/oder Bearbeitungsbereichs) zur Lagerung von mit Stückgut bestückten Paletten gemäß einem Ausführungsbeispiel,
- FIG 2: eine freitragende Trägerstruktur des blockförmigen zweischichtigen freitragenden Hochregallagers (nach FIG 1) und dessen Anordnung an einer Stützstruktur bzw. an Gebäudestützen des Warehouse gemäß einem Ausführungsbeispiel und
- FIG 3: zusätzliche, an der freitragenden Trägerstruktur (FIG 2) anzuordnende Bauteile bzw. Unterstützungselemente für die Ausbildung des blockförmigen, zweischichtigen freitragenden Hochregallagers bzw. dessen Regale/ Lagerfächer und RBG gemäß einem Ausführungsbeispiel.

### "Freitragendes Palattenlager" (FIGen 1 bis 3)

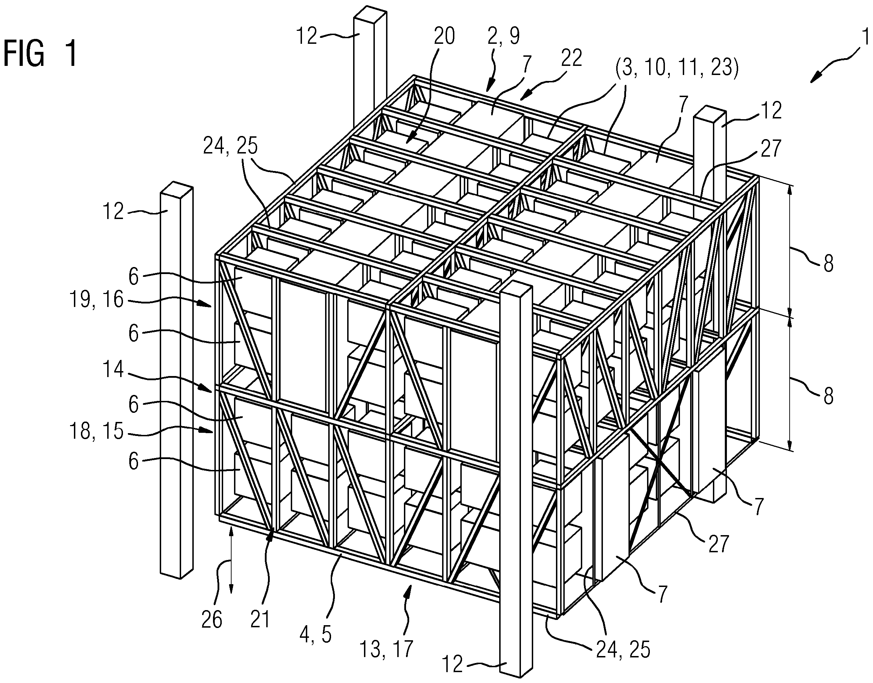

FIG 1 zeigt einen schematisch, räumlich dargestellten Ausschnitt eines Aufbaus (Einzelmodul) eines Warehouse 1 mit einer dortigen blockförmig ausgebildeten Hochregallagereinrichtung 2.

Diese Hochregallagereinrichtung 2 - kurz im Folgenden nur Hochregallager 2 - ist als blockförmiges, "zweiebiges" freitragendes Hochregallager 2 in oberer Ebene 14 (obere Lagerebene 14 bzw. erste obere und zweite obere Lagerebene 15, 16 innerhalb des Hochregallagers 2) des Warehouse 1 (oberhalb eines darunterliegenden Arbeits- und/oder Bearbeitungsbereichs 13 (untere Arbeitsebene 17), nur angedeutet) zur Lagerung von mit Stückgut 10 bestückten Paletten 3 ausgeführt.

Wie FIG 1 verdeutlicht, umfasst so das Hochregallager 2 die über die erste obere und die zweite obere Lagerebenen 15, 16 verteilte (Hochregal-)Lagereinrichtung 2.

D.h., die (Hochregal-)Lagereinrichtung 2 ist in der ersten, oberen Lagerebene 15 sowie in der zweiten, vertikal über der ersten, oberen Lagerebene 15 angeordneten zweiten, oberen Lagerebene 16 angeordnet.

Jede der beiden oberen Lagerebenen 15, 16 umfasst, wie FIG 1 zeigt, einen blockförmigen Lagerbereich 18, 19 zur Lagerung der Paletten 3.

D.h., in der ersten oberen Ebene 15 ist ein erster Lagerbereich 18 mit in Reihen 20 angeordneten Hochregalen 6 angeordnet; in der vertikal darüber liegenden zweiten, oberen Lagerebene 16 ist ein zweiter Lagerbereich 19 mit ebenfalls in Reihen 20 angeordneten Hochregalen 6 angeordnet.

Die Hochregale 6 in der ersten, oberen und in der zweiten, oberen Lagerebene 15, 16 weisen jeweils parallele Regalstrukturen 21 mit den (parallelen) Regalreihen 20 bzw. mit durch parallele Lagergassen 22 durchzogene Regalreihen 20 zur Aufnahme der Paletten 3 auf.

Im Warehouse 29 unterhalb der Lagereinrichtung 2 bzw. unterhalb der oberen Lagerebene 14 ist (in FIG 1 nur angedeutet) - als Grund- bzw. untere Arbeitsebene 18 - ein Bearbeitungsbereich 13 angeordnet, in welchem die - im oberen Teil/in der oberen Lagerebene 14 bzw. der ersten, oberen und zweiten, oberen Lageebene 15, 16 des Warehouse 1 bzw. in der Lagereinrichtung 2 zu lagernden und dort (Nutz-)Lasten 23 bewirkende - Paletten 3 (im Materialfluss der Paletten 3) bearbeitet werden.

Wie FIG 1 zeigt, werden die zwei Lagerbereiche 18, 19 bzw. deren Hochregale 6 jeweils durch eine blockförmige Gestellstruktur 24 aus Strukturelementen/Bauteilen 25, wie u.a. Streben, Balken, Träger, Unterstützungen 25 , gebildet, welche die (Hoch-)Regale 6 zur Aufnahme und Lagerung der Paletten 3 - strukturiert (parallele Regalstruktur 21) in die parallelen, mit (parallelen) Lagergassen 22 durchzogenen Lagerreihen 20 - beherbergt.

Dabei sind, wie die FIG 1 verdeutlicht, die (parallelen) Lagergassen 22 des ersten, oberen Lagerbereichs 18 um ca. 90° (um die Vertikale) gegen die (parallelen) Lagergassen 22 des zweiten, oberen Lagerbereichs 19 verdreht ausgerichtet.

Vereinfacht ausgedrückt, die Längsrichtungen der Lagergassen 22 in der ersten, oberen Lagerebene 15 bzw. im ersten, oberen Lagerbereich 18 sind um ca. 90° um die Vertikale zu den Längsrichtungen der Lagergassen 22 in der zweiten, oberen Lagerebene 16 bzw. im zweiten, oberen Lagerbereich 19 verdreht.

D.h., das Hochregallager 2 sieht zwei vertikal übereinander angeordnete/liegende und um ca. 90° verdreht zueinander angeordnete Lagerbereiche 18, 19 mit jeweils paralleler Lagergassen-Lagerreihen-Struktur 21 vor.

Der Materialfluss, d.h. hier das Transportieren der Paletten 3 im Hochregallager 2 (in den Lagergassen 22) sowie das Ein- und Auslagern der Paletten 3 in/aus den Regalen 6 des Hochregallagers 2 erfolgt mittels eines in dem Hochregallager 2 bzw. in Lagergassen 22 installierten und dort operierenden Bediensystems 7 (RBG).

Entsprechend der blockförmigen Gestellstruktur 24 aus den Strukturelementen 25, wie u.a. den Streben, den Balken, den Trägern und den Unterstützungen 25 , bei den (Hoch-)Regalen 6 weist auch das RBG 7 eine Gestellstruktur 24 mit solchen Strukturelementen 25 wie auch (horizontale und vertikale) Schienen 25 (für ein induziertes Schienensystem, nicht verdeutlicht) u.ä. auf.

Die Anbindung des (oberen) Hochregallagers 2 an den (unteren) Arbeits- und/oder Bearbeitungsbereich 13, d.h. die obere Lagerebene 14 bzw. die erste, obere und zweite obere Lagerebene 15, 16 an die (untere) Arbeitsebene 17, sowie der ersten, oberen und zweiten, oberen Lagerebene 15, 16 untereinander, erfolgt mittels mehrerer vertikaler, sich in vertikaler Richtung über (alle Ebenen) des Warehouse erstreckenden Heber (nicht dargestellt).

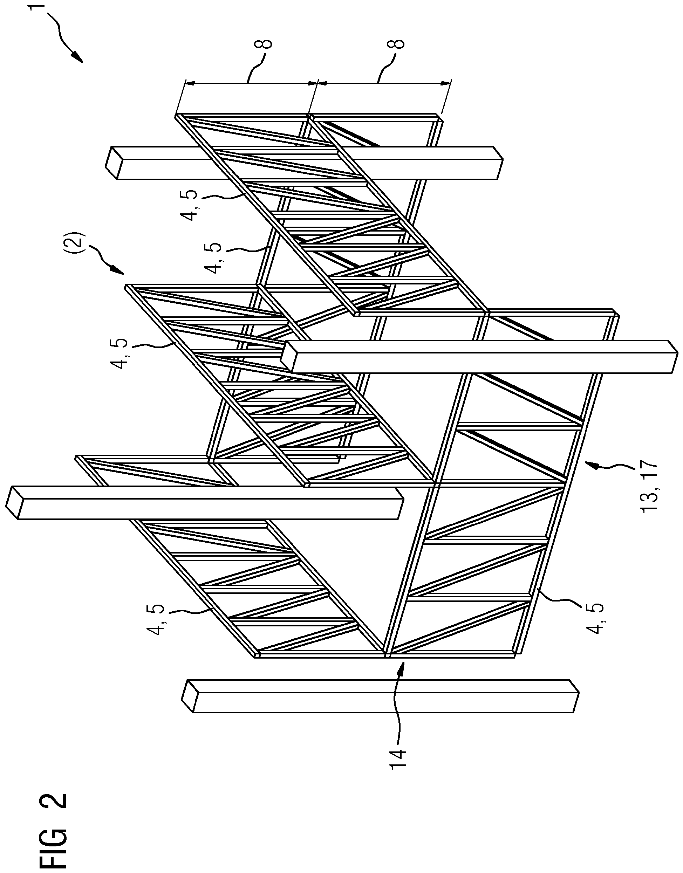

Die Abstützung des freitragenden Hochregallagers 2 im Warehouse 1 erfolgt, wie FIG 2 verdeutlicht, über eine freitragende Trägerstruktur 4 - in Ausbildung als Fachwerkträgerstruktur 4 - des freitragenden Hochregallagers 2.

Dazu sind, wie FIG 2 verdeutlicht, einzelne bei dem Hochregallager 2 benötigte Bauteile 5 (von den Bauteilen 25), wie (bestimmte) Vertikalträger (Stützen) 5, Horizontalträger (Balken) 5 und Diagonalstreben 5 der Regale 6 und des RBG 7 bzw. aus dortigen Gestellstrukturen 24 bzw. dortigen Strukturelementen 25 so ausgebildet und zusammengefügt, dass sie die freitragende Fachwerk-Trägerstruktur 4 ausbilden.

Anders ausgedrückt, einzelne für das Hochregallager 2 (Regale 6 und/oder RBG 7) benötigte Bauteile 5 - Stützen 5, Balken 5 und Diagonalstreben 5 - werden so ausgebildet, dass sie - wie FIG 1 auch zeigt - über die Regalhöhen 8 Fachwerkträger 4 bzw. die freitragende Fachwerk- Trägerstruktur 4 bilden.

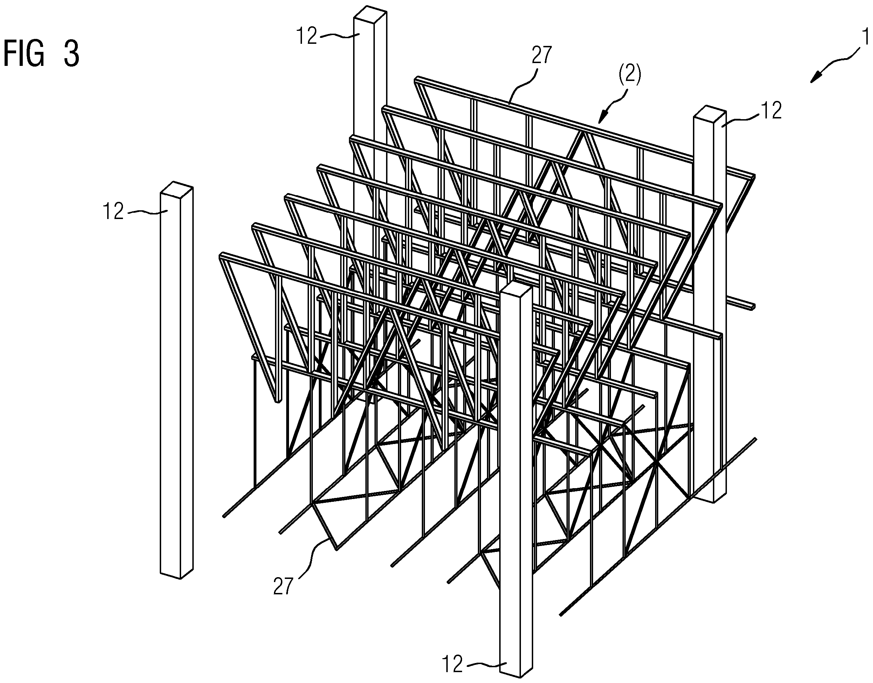

An dieser freitragenden Fachwerk-Trägerstruktur 4 des Hochregallagers 2 sind dann, wie auch FIG 1 und FIG 3 verdeutlicht, weitere (ergänzende) Elemente/Bauteile 27 des Hochregallagers 2, wie flächige Bauteile (nicht verdeutlicht), andere Träger, Balken, Streben u.ä., für die Regale 6 und das RBG 7 (Unterstützungselemente/Unterstützung für Lagerfächer und RBG) (die solchen aus den dortigen Gestellstrukturen 24 bzw. dortigen Strukturelemente 25) - zur Vervollständigung derselben - angeordnet.

Wie FIG 2 (auch FIG 1) weiter zeigt, ist die freitragende Fachwerk- Trägerstruktur 4 des Hochregallagers 2 - und somit das freitragenden Hochregallager 2 über diese innere, d.h. "ihr innewohnende" (durch ihre Bauteile 5 gebildete), freitragende Fachwerk-Trägerstruktur 4 an - in diesem Fall - vier Gebäudestützen 12 des Warehouse 1 (an den Ecken des blockförmigen Hochregallagers 2) - mit vertikalem Bodenabstand (zur Ausbildung der oberen Lagerebene 14 und unteren Arbeitsebene 17) - mittels entsprechender Befestigungsmittel (nicht verdeutlicht) abgestützt.

Durch die freitragende Anordnung der (Fachwerk-Trägerstruktur-)Bauteile 5, insbesondere durch die kreuzweise Anordnung dieser Bauteile 5 bei der freitragende Fachwerk-Trägerstruktur 4, werden die Lasten aus den Regalen 6 (Eigengewicht und Nutzlast) und der RBG 7 direkt an die Gebäudestützen 12 abgetragen.

Dadurch kann die Anordnung einer sonst zusätzlichen Bühne bzw. Gebäudedecke zur Aufstellung der Regale 6 bei einem Warehouse entfallen.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Lagergebäude (1) zum Lagern von Ladeeinheiten (3) mit einer Lagereinrichtung (2),
wobei die Lagereinrichtung (2) Hochregale aufweist,
wobei die Lagereinrichtung (2) als freitragende Trägerstruktur (4) ausgebildet ist,
**dadurch gekennzeichnet, dass**
die freitragende Trägerstruktur (4) an tragenden Elementen (12) des Lagergebäudes (1) abgestützt ist,
wobei die tragenden Elemente (12) Gebäudestützen (12) des Lagergebäudes (1) sind,
wobei die freitragende Lagereinrichtung an den Gebäudestützen des Lagergebäudes aufgehängt ist.

2. Lagergebäude (1) nach Anspruch 1,
**dadurch gekennzeichnet, dass**
die freitragende Trägerstruktur (4) eine Fachwerkträgerstruktur (4), insbesondere mit kreuzförmig angeordneten Trägern (5) und/oder Streben (5) der Lagereinrichtung (2), ist.

3. Lagergebäude (1) nach mindestens einem der voranstehenden Ansprüche,
**dadurch gekennzeichnet, dass**
die freitragende Trägerstruktur (4), insbesondere die Fachwerkträgerstruktur (4), unter Verwendung von Vertikalträger (Stützen) (5), Horizontalträger (Balken) (5) und/oder Diagonalstreben (5) der Lagereinrichtung (2) ausgebildet ist.

4. Lagergebäude (1) nach mindestens einem der voranstehenden Ansprüche,
**dadurch gekennzeichnet, dass**
die Lagereinrichtung (2) Aufnahmeeinheiten (6), insbesondere Hochregale, und/oder Bedieneinheiten (7), insbesondere Regalbediengeräte (RBG) (7), aufweist.

5. Lagergebäude (1) nach mindestens einem der voranstehenden Ansprüche,
**dadurch gekennzeichnet, dass**
die freitragende Trägerstruktur (4) durch Elemente (5) von Aufnahmeeinheiten (6) und/oder Bedieneinheiten (RBG) (7) der Lagereinrichtung (2) gebildet ist.

6. Lagergebäude (1) nach mindestens einem der voranstehenden Ansprüche,
**dadurch gekennzeichnet, dass**
die freitragende Trägerstruktur (4) über eine Höhe (8) einer Aufnahmeeinheit (6), insbesondere über eine Regalhöhe (8) eines Hochregals (6), ausgebildet ist.

7. Lagergebäude (1) nach mindestens einem der voranstehenden Ansprüche,
**dadurch gekennzeichnet, dass**
die Lagereinrichtung (2) blockförmig (9) ausgebildet ist und/oder die Ladeeinheit (3) eine mit Gütern (10) beladbare oder beladene Palette (11) ist.

8. Lagergebäude (1) nach mindestens einem der voranstehenden Ansprüche,
**dadurch gekennzeichnet, dass**
die Lagereinrichtung (2) vertikal oberhalb eines Arbeitsbereichs (13) für die Ladeeinheiten (3) in einer Lagereinheit (1) angeordnet ist.

## Claims

1. Warehouse (1) for storing loading units (3) with storage equipment (2),
wherein the storage equipment (2) has high racks,
wherein the storage equipment (2) is embodied as a self-supporting carrier structure (4),
**characterised in that**
the self-supporting carrier structure (4) is braced against supporting elements (12) of the warehouse (1),
wherein the supporting elements (12) are building supports (12) of the warehouse (1),
wherein the self-supporting storage equipment is suspended on the building supports of the warehouse.

2. Warehouse (1) according to claim 1,
**characterised in that**
the self-supporting carrier structure (4) is a chassis carrier structure (4), in particular with supports (5) and/or struts (5) of the storage equipment (2) which are arranged in the shape of a cross.

3. Warehouse (1) according to at least one of the preceding claims,
**characterised in that**
the self-supporting carrier structure (4), in particular the chassis carrier structure (4), is formed by using vertical carriers (supports) (5), horizontal carriers (bars) (5) and/or diagonal struts (5) of the storage equipment (2).

4. Warehouse (1) according to at least one of the preceding claims,
**characterised in that**
the storage equipment (2) has receiving units (6), in particular high racks, and/or control units (7), in particular storage and retrieval device (7).

5. Warehouse (1) according to at least one of the preceding claims,
**characterised in that**
the self-supporting carrier structure (4) is formed by elements (5) of receiving units (6) and/or control units (RBG) (7) of the storage equipment (2).

6. Warehouse (1) according to at least one of the preceding claims,
**characterised in that**
the self-supporting carrier structure (4) is embodied above a height (8) of a receiving unit (6), in particular above a rack height (8) of a high rack (6).

7. Warehouse (1) according to at least one of the preceding claims,
**characterised in that**
the storage equipment (2) is embodied to be block-shaped (9) and/or the loading unit (3) is a pallet (11) which is loaded or can be loaded with goods (10).

8. Warehouse (1) according to at least one of the preceding claims,
**characterised in that**
the storage equipment (2) is arranged vertically above a working area (13) for the loading units (3) in a storage unit (1) .

## Revendications

1. Bâtiment de stockage (1) permettant de stocker des unités de chargement (3) avec un dispositif de stockage (2),
dans lequel le dispositif de stockage (2) comprend des étagères hautes,
dans lequel le dispositif de stockage (2) est conçu comme une structure de support en porte-à-faux (4),
**caractérisé en ce que**
la structure de support en porte-à-faux (4) est supportée sur des éléments de support (12) du bâtiment de stockage (1),
dans lequel les éléments de support (12) sont des supports de construction (12) du bâtiment de stockage (1),
dans lequel le dispositif de stockage en porte-à-faux est suspendu aux supports de bâtiment du bâtiment de stockage.

2. Bâtiment de stockage (1) selon la revendication 1,
**caractérisé en ce que**
la structure de support en porte-à-faux (4) est une structure de support en treillis (4), en particulier avec des supports (5) et/ou des entretoises (5) disposés en forme de croix du dispositif de stockage (2).

3. Bâtiment de stockage (1) selon au moins l'une des revendications précédentes,
**caractérisé en ce que**
la structure de support en porte-à-faux (4), en particulier la structure de support en treillis (4), est formée en utilisant des poutres verticales (supports) (5), des poutres horizontales (barres) (5) et/ou des entretoises diagonales (5) du dispositif de stockage (2).

4. Bâtiment de stockage (1) selon au moins l'une des revendications précédentes,
**caractérisé en ce que**
le dispositif de stockage (2) comprend des unités de réception (6), en particulier des étagères hautes, et/ou des unités de desserte (7), en particulier des dispositifs de desserte d'étagère (RBG) (7).

5. Bâtiment de stockage (1) selon au moins l'une des revendications précédentes,
**caractérisé en ce que**
la structure de support en porte-à-faux (4) est formée par des éléments (5) d'unités de réception (6) et/ou d'unités de desserte (RBG) (7) du dispositif de stockage (2).

6. Bâtiment de stockage (1) selon au moins l'une des revendications précédentes,
**caractérisé en ce que**
la structure de support en porte-à-faux (4) est formée sur une hauteur (8) d'une unité de réception (6), en particulier sur une hauteur d'étagère (8) d'une étagère haute (6).

7. Bâtiment de stockage (1) selon au moins l'une des revendications précédentes,
**caractérisé en ce que**
le dispositif de stockage (2) est conçu en forme de bloc (9) et/ou l'unité de chargement (3) est une palette (11) qui peut être chargée ou est chargée de marchandises (10).

8. Bâtiment de stockage (1) selon au moins l'une des revendications précédentes,
**caractérisé en ce que**
le dispositif de stockage (2) est disposé de manière verticale au-dessus d'une zone de travail (13) pour les unités de chargement (3) dans une unité de stockage (1).
